# EUROPEAN PATENT SPECIFICATION

(11) **EP 0 927 901 B1**
(45) Date of publication and mention of the grant of the patent: **19.09.2007**
(21) Application number: 98310507.3
(22) Date of filing: 21.12.1998
(51) Int. Cl.: G02B 7/182, G02B 7/00

(54) **Adjustable mounting of optical components**
Justierbare Halterung für optische Bauteile
Monture ajustable pour des composants optiques

(30) Priority: 29.12.1997 EP 97310649
(43) Date of publication of application: 07.07.1999
(73) Proprietor: PERKIN-ELMER LIMITED, Beaconsfield, Buckinghamshire HP9 1QA (GB)
(72) Inventor: Sharp, Douglas, Cowley, Oxford OX4 3SR (GB); Hoult, Robert Alan, Beaconsfield, Bucks. HP9 2TL (GB)
(74) Representative: Smith, Norman Ian

(56) References cited:
- EP-A- 0 362 416
- EP-A- 0 491 207
- WO-A-87/06358
- FR-A- 2 615 000
- US-A- 4 929 073
- US-A- 5 214 529

## Description

This invention relates to the mounting of optical components.

There is often a requirement in instruments such as spectrometers for an optical component to be mounted in such a way that it is accurately aligned relative to a preselected axis and such that that alignment can be maintained during the operation of the instrument. The present invention is concerned with a mounting arrangement which can achieve this requirement in a relatively simple and effective manner.

According to the present invention there is provided an arrangement for mounting an optical component as defined in claim 1.

The arrangement may be such that one mounting element is fixed and the other two are each provided on a pivotable mounting member.

The force applying means may include a solenoid.

Each pivotable mounting member may be generally elongate, the mounting elements being provided towards one end thereof, and the force applying means being arranged to act at the other end thereof. Each pivotable mounting member may have integral, transversely extending links which provides the torsion bar pivot mounting arrangement.

The mounting elements may be arranged at the apices of an equiangular triangle.

In an arrangement constructed in accordance with the present invention an optical component is mounted so that it is supported on the three mounting elements. It is aligned by applying a force to one or both of the pivotable mounting members so that that mounting member moves against the resilience of its pivot mounting. If the pivoting force is removed then the pivot mounting will return under the action of the resilience of the pivot mounting towards it original position. The means for applying the force to the pivotable mounting member may be incorporated into a feedback loop arrangement so that by monitoring the output derived from the optical component, the alignment of that component can be carried out automatically on the basis of a sensed signal. For example, the arrangement may be such that this sensed signal is maintained at a maximum.

The invention will be described now by way of example only, with particular reference to the accompanying drawings. In the drawings:
Figure 1 is a plan schematic view of a mounting arrangement in accordance with an embodiment of the present invention,
Figure 2 is a section on the line X-X of Figure 1, and
Figure 3 shows in more detail a part of the mounting arrangement of Figure 1.

The mounting arrangement shown in the drawings is designed tp support an optical component (10) within a circular aperture (11) formed in a mounting plate (12). The aperture (11) is formed such that there is defined at a lower peripheral edge of the wall of the plate surrounding said aperture a circumferential radially inwardly extending lip (14). A fixed first mounting pad (16) is carried on the lip (14).

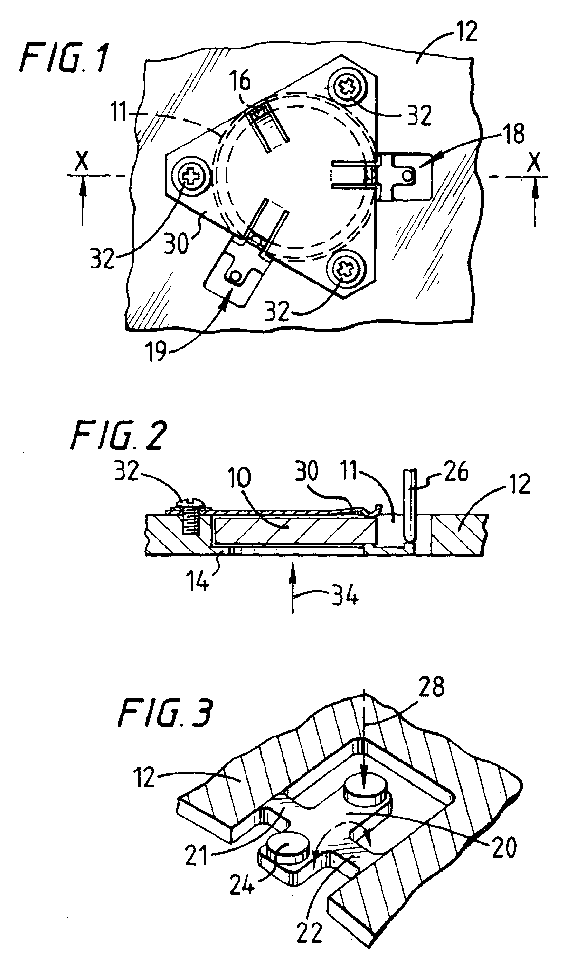

At positions spaced by 120° from the fixed pad (16) two mounting assemblies (18 and 19) are provided. With particular reference to Figure 3 each mounting assembly (18) has been formed by machining the mounting plate (12) at the appropriate position to define an elongate mounting member (20) which is connected integrally to the main body of the mounting plate by laterally extending portions (21, 22) in such a manner as to define a torsion bar arrangement. An optical component mounting pad (24) is provided at the radially inner portion of the elongate member (20), whilst the other end can receive a force applied by a solenoid rod (26) coupled to a solenoid (not shown). As can be seen from Figure 3 a force applied downwardly in the direction of the arrow (28) will cause the elongate member (20) to pivot slightly around the laterally extending portions (21 and 22), thereby raising the pad (24). Similarly if that force is reduced then the pad (24) will return to its lower position by virtue of the natural resilience of the arrangement. The degree of movement of the pad (24) which can be provided by the arrangement shown in Figure 3 is of the order of a few microns.

It will be appreciated that the mounting assembly shown at Figure 3 is provided at each of the positions (18 and 19) shown in Figure 1.

Referring to Figure 2 the optical component is thus mounted at three equiangularly spaced position on the pad (16) and the two pads (24). A leaf spring (30) which is secured by screws (32) to the mounting plate (11) maintains the component in position on the pads within the aperture (11).

In operation the fixed pad (16) acts as a pivot point for the optical component (10), whilst the other two pads (24) can be adjusted to cause the optical component to pivot about that pivot point. When adjustment of the optical component is required, either or both of the linear solenoids is energised to apply a force to the radially outer end of the elongate mounting member (20). This causes the opposite end of the elongate mounting member which carries the pad (24) to deflect slightly thereby pivoting the optical component about the pad (16). By incrementing the current into the solenoid the force applied by the solenoid can be incremented, thus providing an incremental pad displacement. This in turn causes the optical component to rotate about the pivot pad, thus changing the orientation of the optical component. By monitoring the output signal of the optical component, it is possible to control the two solenoids in such a way that the optical component is maintained in the optimum position, e.g. when its optical output is at a maximum.

It will be appreciated that provided the elastic limit of the torsion bar assembly is not exceeded once the solenoid force is reduced or removed, the arrangement will return to its original position. Thus, by controlling the current in both solenoids the deflections of the pads (24) can be used to cause the optical component (10) to take up any desired orientation within the limit of movement of the pads.

As shown in Figure 2, the optical component can be a mirror in which a light beam (34) is shown to be incident on the mirror. By monitoring the output signal reflected form that mirror and using an appropriate feedback arrangement automatic adjustment can be made to the current applied to the solenoids to keep the light energy at a maximum. Thus the arrangement can be used to provide automatic alignment.

## Claims

1. An arrangement for mounting an optical component (10) so that the plane of the component can be accurately orientated angularly with respect to a defined axis, said arrangement comprising
three mounting elements (16, 18, 19) on which the component can be mounted, said elements being disposed generally at the apices of a triangle, at least two of the mounting elements (18, 19) each comprising a pivotable mounting member (20) and a resilient pivot mounting, such that part (24) of each said pivotable mounting member (20) is supported such that it is pivotable against the resilience of said respective resilient pivot mounting,
and means (26) for applying a force to each of another part of the respective pivotable mounting member (20) to cause it to pivot about the respective resilient pivot mounting to thereby adjust the orientation of the plane of the optical component (10), **characterised in that**
each said resilient pivot mounting comprises a pair of pivot mounting members which function as torsion bars (21, 22).

2. A mounting arrangement according to claim 1, wherein one of the mounting elements (16) is fixed and the other two are each provided on a respective pivotable mounting member.

3. A mounting arrangement according to claim 1 or claim 2, wherein the force applying means (26) includes a solenoid.

4. A mounting arrangement according to any preceding claim, wherein each pivotable mounting member is generally elongate, the mounting elements (24) being provided towards one end thereof and the force applying means (26) being arranged to act at the other end thereof.

5. A mounting arrangement according to claim 4, wherein each pivotable mounting member has integral, transversely extending links (21, 22) which provides the torsion bar pivot mounting arrangement.

6. A mounting arrangement according to any preceding claim, wherein the mounting elements (16, 18, 19) are arranged at the apices of an equiangular triangle.

7. A mounting arrangement according to any preceding claim, wherein the force applying means is arranged to be controlled in accordance with a sensed output of the optical component, whereby the orientation of the component can be adjusted automatically.

## Patentansprüche

1. Vorrichtung zur Halterung einer optischen Komponente (10), so dass die Ebene der Komponente bezüglich einer definierten Achse winkelmäßig genau orientiert werden kann, wobei die Vorrichtung drei Halterungselemente (16,18, 19) umfasst, auf denen die Komponente gehaltert werden kann, wobei die Elemente allgemein an den Spitzen eines Dreieckes vorgesehen sind, wobei zumindest zwei der Halterungselemente (18, 19) jeweils ein drehbares Halterungsglied (20) und eine federnde Drehhalterung umfassen, so dass Teil (24) von jedem der drehbaren Halterungsglieder (20) so abgestützt ist, dass es gegen die Federwirkung der jeweiligen federnden Drehhalterung drehbar ist, und Mittel (26) zur Ausübung einer Kraft auf jeden von einem anderen Teil des jeweiligen drehbaren Halterungsgliedes (20), um es zu veranlassen, sich um die jeweilige federnde Drehhalterung zu drehen, um dadurch die Orientierung der Ebene der optischen Komponente (10) einzustellen, **dadurch gekennzeichnet, dass** jede federnde Drehhalterung ein Paar von Drehhaltungsgliedern umfasst, die als Torsionsbalken (21,22) wirken.

2. Halterungsvorrichtung gemäß Anspruch 1, wobei eines der Halterungselemente (16) befestigt ist und die anderen zwei jedes an einem jeweils drehbaren Halterungsglied vorgesehen sind.

3. Halterungsanordnung gemäß Anspruch 1 oder Anspruch 2, wobei das Kraftaufbringungsmittel (26) ein Solenoid beinhaltet.

4. Halterungsvorrichtung gemäß einem der vorangehenden Ansprüche, wobei jedes drehbare Halterungsglied allgemein verlängert ist, wobei Halterungselemente (24) in Richtung auf deren eines Ende vorgesehen sind und die Kraftaufbringungsmittel (26) angeordnet sind, um auf deren anderes Ende einzuwirken.

5. Halterungsvorrichtung gemäß Anspruch 4, wobei jedes drehbare Halterungsglied integrale, sich quer erstreckende Verbindungen (21, 22) aufweist, welche die Torsionsbalkendrehhalterungsanordnung bereitstellen.

6. Halterungsvorrichtung gemäß einem vorangehenden Anspruch, wobei die Halterungselemente (16,18,19) an den Spitzen eines gleichwinkligen Dreieckes angeordnet sind.

7. Halterungsvorrichtung gemäß einem vorangehenden Anspruch, wobei das Kraftaufbringungsmittel vorgesehen ist, um zufolge einer gemessenen Ausgabe der optischen Komponente betrieben zu werden, wobei die Orientierung der Komponente automatisch einstellbar ist.

## Revendications

1. Agencement permettant de monter un composant optique (10) de telle sorte que le plan du composant peut être orienté avec précision de manière angulaire par rapport à un axe défini, ledit agencement comprenant trois éléments de montage (16, 18, 19) sur lesquels le composant peut être monté, lesdits éléments étant disposés en général au niveau des sommets d'un triangle, au moins deux des éléments de montage (18, 19) chacun comprenant un élément de montage pivotant (20) et un montage pivotant résilient, de telle sorte qu'une partie (24) de chacun desdits éléments de montage pivotants (20) est supporté de manière à pouvoir pivoter à l'encontre de la résilience dudit montage pivotant résilient respectif, et des moyens (26) permettant d' appliquer une force sur chaque autre partie de l'élément de montage pivotant respectif (20) pour l'amener à pivoter autour du montage pivotant résilient respectif afin d'ajuster l'orientation du plan du composant optique (10), **caractérisé en ce que** chaque dit montage pivotant résilient comprend une paire d'éléments de montage pivotants servant de barres de torsion (21, 22),

2. Agencement de montage selon la revendication 1, dans lequel l'un des éléments de montage (16) est fixé et les deux autres sont chacun prévus sur un élément de montage pivotant respectif.

3. Agencement de montage selon la revendication 1 ou 2, dans lequel le moyen d'application de force (26) comporte un solénoïde.

4. Agencement de montage selon l'une quelconque des revendications précédentes, dans lequel chaque élément de montage pivotant est généralement allongé, les éléments de montage (24) étant prévus vers l'une de ses extrémités, et le moyen d'application de force (26) étant agencé de manière à agir au niveau de son autre extrémité.

5. Agencement de montage selon la revendication 4, dans lequel chaque élément de montage pivotant possède des liaisons s'étendant transversalement de manière solidaire (21, 22) qui fournissent l'agencement de montage pivotant de barre de torsion.

6. Agencement de montage selon l'une quelconque des revendications précédentes, dans lequel les éléments de montage (16, 18, 19) sont agencés au niveau des sommets d'un triangle équilatéral.

7. Agencement de montage selon l'une quelconque des revendications précédentes, dans lequel le moyen d'application de force est agencé de manière à être commandé en fonction d'une sortie détectée du composant optique, grâce à quoi l'orientation du composant peut être ajustée automatiquement.
